# EUROPÄISCHE PATENTSCHRIFT

(11) **EP 4 193 229 B1**
(45) Veröffentlichungstag und Bekanntmachung des Hinweises auf die Patenterteilung: **18.12.2024**
(21) Anmeldenummer: 21746727.3
(22) Anmeldetag: 20.07.2021
(51) Int. Cl.: G05D 1/00

(54) **REINIGUNGSSYSTEM MIT EINEM SELBSTFAHRENDEN REINIGUNGSROBOTER UND EINER LADESTATION UND VERFAHREN ZUM ANFAHREN DES REINIGUNGSROBOTERS AN DER LADESTATION**
CLEANING SYSTEM COMPRISING A SELF-DRIVING CLEANING ROBOT AND A CHARGING STATION, AND METHOD FOR MOVING THE CLEANING ROBOT TO THE CHARGING STATION
SYSTÈME DE NETTOYAGE COMPRENANT UN ROBOT DE NETTOYAGE ET UNE STATION DE CHARGE, ET PROCÉDÉ DE DÉPLACEMENT DU ROBOT DE NETTOYAGE VERS LA STATION DE CHARGE

(30) Priorität: 05.08.2020 DE 102020209841
(43) Veröffentlichungstag der Anmeldung: 14.06.2023
(73) Patentinhaber: BSH Hausgeräte GmbH, 81739 München (DE)
(72) Erfinder: FREMEREY, Maximilian, 97633 Saal an der Saale (DE); BAIRAMPALLI, Sandeep, Bangalore 560062 (IN); NITHIN, Ganesh, Bangalore 560043 (IN); GHOSH, Pratip, Bangalore 560035 (IN)
(86) Internationale Anmeldenummer: PCT/EP2021/070253
(87) Internationale Veröffentlichungsnummer: WO 2022/028877

(56) Entgegenhaltungen:
- US-A1- 2014 100 693
- US-A1- 2016 091 899
- US-A1- 2016 318 415

## Beschreibung

Die vorliegende Erfindung betrifft ein Reinigungssystem mit einem selbstfahrenden Reinigungsroboter und einer Ladestation gemäß dem Oberbegriff des Anspruchs 1. Die Erfindung betrifft außerdem ein Verfahren zum Anfahren eines selbstfahrenden Reinigungsroboters an eine Ladestation eines solchen Reinigungssystems.

Bekannte Reinigungssysteme besitzen üblicherweise einen selbstfahrenden, das heißt autonomen, Reinigungsroboter, beispielsweise einen Saugroboter, und eine Ladestation, in welche der Reinigungsroboter temporär einfährt, bzw. dort andockt, um seinen Akku aufzuladen.

Derartige Reinigungssysteme sind beispielsweise aus den Druckschriften US 2014/0100693 A1 und US 2016/0318415 A1 bekannt.

Aus der US 2016/0091899 A1 ist ein gattungsgemäßes Reinigungssystem mit einem selbstfahrenden Reinigungsroboter und einer Ladestation zum Aufladen eines Akkus des Reinigungsroboters bekannt, wobei die Ladestation sichtbar angeordnete Referenzmarkierungen aufweist und der Reinigungsroboter eine optische Erfassungseinrichtung, über die er diese Referenzmarkierungen erfassen kann. Ebenfalls besitzt der Reinigungsroboter eine Rechnereinrichtung, die kommunizierend mit der Erfassungseinrichtung und einer Steuereinrichtung zum Steuern eines Fahrprozesses des Reinigungsroboters, beispielsweise eines Antriebs, verbunden ist und die in der Lage ist, einen von der optischen Erfassungseinrichtung bereitgestelltes Bild zweier Referenzmarkierungen zu erhalten und die Steuereinrichtung bzw. ein Antriebssystem des Reinigungsroboters so zu steuern, dass diese auf Grundlage eines Unterschieds zwischen der Darstellung zweier Referenzmarkierungen in dem empfangenen Bild und einem vorbestimmten relativen Abstand zwischen der ersten und zweiten Referenzmarkierung zu der Ladestation fährt. Ein Ansteuern der Ladestation erfolgt somit über eine kamerabasierte Erfassungseinrichtung zur Erfassung zweier Referenzmarkierungen.

Aus der EP 3 185 096 A1 ist eine Ladestation für eine autonome Reinigungsvorrichtung bekannt, die einen Stationskörper mit einer Energieversorgungsschnittstelle umfasst. Die Energieversorgungsschnittstelle ist auf einer Seitenfläche des Stationskörpers angeordnet, um die autonome Reinigungsvorrichtung mit Energie zu versorgen. Des Weiteren vorgesehen ist eine Identifikationsstruktur, die ebenfalls an der Seitenfläche des Stationskörpers angeordnet ist und die es ermöglicht, eine Position der Energieversorgungsschnittstelle durch eine Erfassungseinrichtung an der autonomen Reinigungsvorrichtung zu erkennen und die autonome Reinigungsvorrichtung entsprechend anzusteuern. Die Identifikationsstruktur umfasst dabei zumindest eine Ausbuchtung und mindestens eine Vertiefung, die eine Oberflächenstruktur bilden, die bei einem Lichteinfall eine unterschiedliche Intensität von rückgestrahltem Licht und dadurch eine Identifizierung ermöglicht. Hierdurch ist ebenfalls ein Ansteuern der autonomen Reinigungsvorrichtung, beispielsweise eine selbstfahrenden Reinigungsroboters, an die Ladestation möglich.

Aus der US 8,749,196 B2 ist eine Kombination aus einem autonomen Roboter, einer Ladestation und einem Navigationssteuersystem zum Steuern der Bewegung und des Betriebs des Roboters bekannt. An der Ladestation ist dabei ein Signalemitter zum Projizieren eines Signals zu dem Roboter vorgesehen. Letzterer besitzt zumindest einen Signaldetektor, der dafür ausgelegt ist, mindestens ein durch den Emitter der Ladestation projiziertes Infrarot-Andocksignal zu detektieren, wobei hierfür Raumabbildungsprogramme unter Verwendung der Ladestation und/oder Wände und große Objekte als Bezugspunkte verwendet werden.

Nachteilig bei den aus dem Stand der Technik bekannten Reinigungssystemen bzw. Ladestationen ist, dass diese nicht nur vergleichsweise groß bauen und technisch aufwändig und damit teuer sind, sondern zudem auch Schwierigkeiten beim Auffinden der Ladestation durch einen Reinigungsroboter bestehen, sofern keine Sicht- bzw. Signalverbindung zwischen dem Reinigungsroboter und der Ladestation besteht.

Die vorliegende Erfindung beschäftigt sich daher mit dem Problem, für ein Reinigungssystem der gattungsgemäßen Art eine verbesserte oder zumindest eine alternative Ausführungsform anzugeben, die insbesondere die aus dem Stand der Technik bekannten Nachteile überwindet und insbesondere ein verbessertes Auffinden einer Ladestation durch einen autonomen Reinigungsroboter ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Reinigungssystem mit einer Ladestation und einem autonomen, das heißt selbstfahrenden, Reinigungsroboter anzugeben, der sich zum selbsttätigen Auffinden der Ladestation zweier unterschiedlicher Verfahren, nämlich einem sogenannten HOG-Verfahren (Histogramm von orientierten Gradienten) und einem Referenzmarkierungs-Verfahren (Fiducial Marker) bedient. Das erfindungsgemäße Reinigungssystem kombiniert somit diese beiden Verfahren erstmals, wodurch der große Vorteil entsteht, dass die Ladestation an sich kompakter und weniger auffällig gebaut werden kann und der Reinigungsroboter die Ladestation auch dann findet, wenn er so weit von dieser entfernt ist, beispielsweise in einem anderen Zimmer einer zu reinigenden Wohnung, dass ein direkter Sichtkontakt zur Ladestation und damit eine direkte Signalverbindung nicht bestehen. Das erfindungsgemäße Reinigungssystem weist somit den zuvor beschriebenen selbstfahrenden Reinigungsroboter und die Ladestation zum Aufladen eines Akkus des Reinigungsroboters auf, wobei die Ladestation eine sichtbar angeordnete Referenzmarkierung und der Reinigungsroboter eine optische Erfassungseinrichtung aufweisen, über die er die ladestationsseitige Referenzmarkierung sowie eine Umgebung erfassen kann. Zudem besitzt der erfindungsgemäße Reinigungsroboter eine Rechnereinrichtung, beispielsweise einen Mikroprozessor, die kommunizierend mit der Erfassungseinrichtung und einer Steuereinrichtung zum Steuern eines Fahrprozesses des Reinigungsroboters verbunden ist. Die Steuereinrichtung umfasst dabei vorzugsweise auch eine Antriebseinrichtung, über welche der Reinigungsroboter angetrieben ist. Alternativ ist selbstverständlich auch denkbar, dass die Steuereinrichtung mit der Antriebseinrichtung lediglich kommunizierend verbunden ist. Erfindungsgemäß ist nun die Rechnereinrichtung derart ausgebildet, dass sie einen Anfahrvorgang des Reinigungsroboters zur Ladestation über das zuvor beschriebene HOG-Verfahren (Histogramm von orientierten Gradienten) steuert, sofern ein Abstand des Reinigungsroboters zur Ladestation größer ist als ein vordefinierter Abstand oder die Erfassungseinrichtung des Reinigungsroboters die Referenzmarkierung nicht erfasst, indem über das HOG-Verfahren ein Merkmalsklassifikator geschaffen wird, der zur Erkennung von Objekten in der Bildverarbeitung ausgebildet ist und dadurch eine sogenannte Region of Interest (ROI) erzeugt, die die Referenzmarkierung enthält. Dies ist beispielsweise der Fall, sofern sich der Reinigungsroboter derart weit weg von seiner Ladestation befindet, dass seine optische Erfassungseinrichtung die ladestationsseitige Referenzmarkierung nicht eindeutig erkennen kann. Dieser Zustand ist bei Entfernungen von größer als 3 Metern zwischen der Ladestation und dem Reinigungsroboter denkbar, da hier eine Erfassung der Referenzmarkierung für die optische Erfassungseinrichtung an dem Reinigungsroboter schwierig ist. Darüber hinaus ist die erfindungsgemäße Rechnereinrichtung derart ausgebildet, dass sie einen Anfahrvorgang des Reinigungsroboters zur Ladestation über die Referenzmarkierung steuert, sofern die Erfassungseinrichtung die Referenzmarkierung erkennt und ein Abstand des Reinigungsroboters zur Ladestation kleiner oder gleich ist als der vordefinierter Abstand und die Erfassungseinrichtung des Reinigungsroboters die Referenzmarkierung erfasst. Befindet sich somit der Reinigungsroboter in einem näheren Umfeld der Ladestation, so kann ein Anfahren derselben ausschließlich über das Referenzmarkierungs-Verfahren erfolgen, während das erfindungsgemäße Reinigungssystem bei einer größeren Distanz zwischen der Ladestation und dem Reinigungsroboter zunächst das HOG-Verfahren nutzt, bis der Reinigungsroboter so nah an die Ladestation herangefahren ist, dass eine weitere Navigation über die Referenzmarkierung an der Ladestation möglich ist. Das erfindungsgemäße Reinigungssystem kombiniert somit erstmals zwei unterschiedliche Navigationsverfahren zum Anfahren eines Reinigungsroboters an eine zugehörige Ladestation und ermöglicht dadurch eine konstruktiv weniger aufwändige und kleinere Ladestation. Über das HOG-Verfahren ist es zudem möglich, einen Selbstlerneffekt zu implementieren, der ein Auffinden der Ladestation bei unterschiedlichen Winkeln, Beleuchtungsverhältnissen und Entfernungen zu derselben, ermöglicht. Erfindungsgemäß berechnet die Rechnereinrichtung den Abstand d, Koordinaten sowie einen Winkel α des Reinigungsroboters zu einem Mittelpunkt der Referenzmarkierung, sofern die Erfassungseinrichtung die Referenzmarkierung erfasst.

Zweckmäßig weist die Referenzmarkierung zumindest zwei Bilder und/oder Formen auf. Die beiden Bilder bzw. Formen können dabei in einem vordefinierten Abstand zueinander angeordnet sein und Kanten, Linien bzw. Punkte bilden, die für die optische Erfassungseinrichtung des Reinigungsroboters eindeutig identifizierbar und von der Rechnereinrichtung in entsprechende Steuerungsbefehle an die Steuereinrichtung bzw. eine Antriebseinrichtung des Reinigungsroboters umsetzbar sind. Die Referenzmarkierung bzw. deren Bilder und/oder Formen sind dabei so gestaltet, dass die zur Navigation erforderlichen Fixpunkte bzw. Linien eindeutig und leicht von der Erfassungseinrichtung erfasst werden können. Die Referenzmarken mit ihren einzelnen Punkten werden dann mit einem von der Erfassungseinrichtung erfassten Bild überlagert und als Maßeinheit bzw. Bezugspunkt verwendet.

Zweckmäßig weist die Referenzmarkierung drei nebeneinander angeordnete Rechtecke auf, wovon das mittlere Rechteck eine andere Farbe und/oder Form aufweist, als die beiden seitlichen Rechtecke. Hierbei ist insbesondere denkbar, dass das mittlere Rechteck 7,5 cm hoch und 8 cm breit ist, während die beiden seitlichen Rechtecke Quadrate mit jeweils 7,5 cm Seitenlänge sind. Hierdurch können insgesamt acht Fixpunkte auf der Referenzmarkierung, nämlich die jeweiligen Eckpunkte der quadratischen Rechtecke zur Navigation genutzt werden. Um das Auffinden bzw. Erfassen dieser Referenzmarkierungen zu erleichtern, kann das mittlere Rechteck auch weiß sein, während die beiden seitlichen Rechtecke rot sind. Hierdurch werden die jeweiligen Eckpunkte der seitlichen Rechtecke farblich hervorgehoben.

Bei einer weiteren vorteilhaften Ausführungsform der erfindungsgemäßen Lösung beträgt der vordefinierte Abstand d ca. 3 Meter. Bei der Entwicklung der Erfindung hat sich gezeigt, dass eine maximale Distanz zum zuverlässigen Erkennen der Referenzmarkierung bzw. zum zuverlässigen Navigieren des Reinigungsroboters zur Ladestation ca. 3 Meter beträgt. Innerhalb dieser Distanz d ist es für die optische Erfassungseinrichtung, beispielsweise eine USB-Kamera, problemlos möglich, die einzelnen Fixpunkte bzw. Linien/Kanten der Referenzmarkierung zu erkennen und allein über diese die Ladestation anzufahren. Bei einem Abstand d von größer als 3 Metern können unter Umständen Schwierigkeiten auftreten, so dass in diesem Fall bei der vorliegenden Erfindung das erfindungsgemäße HOG-Verfahren eingesetzt wird. Über das HOG-Verfahren kann ein Merkmalsklassifikator geschaffen werden, der zur Erkennung von Objekten in der Bildverarbeitung ausgebildet ist und dadurch eine sogenannte Region of Interest (ROI) erzeugt, die die Referenzmarkierung enthält. Die größte Herausforderung bei der Erstellung eines derartigen Merkmalsklassifikators besteht darin, dass er mit Variationen bezüglich Beleuchtung, Position und Verdeckung der Ladestation im Bild zurechtkommen muss. Um dies zu erreichen, ist es erforderlich, den Klassifikator zu trainieren, beispielsweise mit unterschiedlichen Ausrichtungen, Hintergründen, Beleuchtungssituationen und unterschiedlichen Verdeckungen der Ladestation.

Die vorliegende Erfindung beruht weiter auf dem allgemeinen Gedanken, ein Verfahren zum Anfahren eines selbstfahrenden Reinigungsroboters an eine Ladestation eines in den vorherigen Absätzen beschriebenen Reinigungssystems anzugeben, bei welchem die Rechnereinrichtung einen Anfahrvorgang des Reinigungsroboters zur Ladestation über ein Histogramm von orientierten Gradienten (HOG) steuert, sofern ein Abstand des Reinigungsroboters zur Ladestation größer ist als ein vordefinierter Abstand d oder die Erfassungseinrichtung des Reinigungsroboters die Referenzmarkierung nicht erfasst, indem über das HOG-Verfahren ein Merkmalsklassifikator geschaffen wird, der zur Erkennung von Objekten in der Bildverarbeitung ausgebildet ist und dadurch eine sogenannte Region of Interest (ROI) erzeugt, die die Referenzmarkierung enthält. Sofern die Erfassungseinrichtung die Referenzmarkierung erkennt und ein Abstand des Reinigungsroboters zur Ladestation kleiner oder gleich ist als der vordefinierte Abstand d und die Erfassungseinrichtung des Reinigungsroboters die Referenzmarkierung mittels der optischen Erfassungseinrichtung erfasst, wird bei dem Erfassungseinrichtungen Verfahren der Anfahrvorgang des Reinigungsroboters zur Ladestation über die Referenzmarkierung gesteuert. Das erfindungsgemäße Verfahren nutzt somit erfassungsabhängig und distanzabhängig unterschiedliche Navigationsverfahren, nämlich einmal das Referenzmarkierungsverfahren und das andere Mal das HOG-Verfahren. Mittels des erfindungsgemäßen Verfahrens ist es somit möglich, ein präzises und zuverlässiges Auffinden der Ladestation anzugeben, welches zugleich kostengünstig ist und eine bauraumoptimierte und kostengünstige Ausbildung der Ladestation ermöglicht.

Erfindungsgemäß berechnet die Rechnereinrichtung den Abstand d, Koordinaten sowie einen Winkel α des Reinigungsroboters zu einem Mittelpunkt der Referenzmarkierung, sofern die Erfassungseinrichtung die Referenzmarkierung erfasst. Dies kann beispielsweise über eine Überlagerung des von der Erfassungseinrichtung erfassten Bildes mit der darin enthaltenen Referenzmarkierung erfolgen. Über den Abstand d, die Koordinaten sowie den Winkel α und den daraus errechneten Mittelpunkt der Referenzmarkierung lässt sich der Reinigungsroboter über die Rechnereinrichtung und die damit kommunizierend verbundene Steuereinrichtung zielgenau zur Ladestation steuern.

Zweckmäßig steuert die Rechnereinrichtung bei einem Winkel α ≤ 10 Grad, den Reinigungsroboter direkt auf die Ladestation zu, da in diesem Bereich ein Optimum hinsichtlich d zwischen Reinigungsroboter und Ladestation vorliegt. Ein Regler, z.B. einem Proportionalregler, stellt während des Anfahrens der Ladestation sicher, dass bei Abweichungen zum im vorherigen Absatz erfassten Mittelpunkt der Referenzmarkierung entsprechend korrigierend eingegriffen wird. Damit wird auf möglicherweise auftretende Ungenauigkeiten in der Positionsschätzung des Roboters infolge der Messfehler der Odomoetriesensoren reagiert. Hierdurch wird eine zielgenaue Steuerung des Reinigungsroboters zur Ladestation ermöglicht.

Für Winkel α größer 10 Grad hat sich für das Auffinden der Ladestation folgende weitere vorteilhafte Ausführungsform des erfindungsgemäßen Verfahrens ergeben: Zunächst initiiert die Rechnereinrichtung bei einem Winkel von α ≥ 10 Grad eine Drehung des Reinigungsroboters entgegen dem Uhrzeigersinn um einen Winkel β = (90 Grad - α) und verfährt diesen anschließend um einen Abstand d₁ = d x cos(β). Ist der Reinigungsroboter um den Abstand d₁ verfahren, initiiert die Rechnereinrichtung über die Steuereinrichtung eine weitere Drehung des Reinigungsroboters um einen Winkel von 90 Grad im Uhrzeigersinn und verfährt ihn anschließend um einen Abstand d₂ = d x sin(β). Nach Abfahren des Abstandes d₂ hat der Reinigungsroboter in der Regel eine vorteilhaftere Stellung hinsichtlich der Ladestation erreicht, so dass diese nun besser mit den vorangehend beschriebenen Verfahren gefunden werden kann.

Bei einer weiteren vorteilhaften Ausführungsform des erfindungsgemäßen Verfahrens fährt die Rechnereinrichtung den Reinigungsroboter zurück, sofern dessen Abstand d zur Ladestation weniger als 100 cm beträgt und zugleich der Winkel α größer 10 Grad ist. Bei einem Abstand d von kleiner 100 cm und einem Winkel α kleiner 10 Grad, kann der Reinigungsroboter direkt zur Ladestation fahren, während er bei einem Winkel α > 10 Grad zunächst das Verdrehen entgegen dem Uhrzeigersinn, das Verfahren entlang des Abstandes d₁ sowie das anschließende Verdrehen im Uhrzeigersinn und das Abfahren des Abstandes d₂ entsprechend dem vorherigen Absatz durchführt. Alles in allem kann mit dem erfindungsgemäßen Verfahren ein vergleichsweise einfaches und dennoch zuverlässiges Auffinden der Ladestation erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: ein erfindungsgemäß Reinigungssystem,
- Fig. 2: eine mögliche Ausführungsform einer Erfassungseinrichtung mit Referenzmarkierung,
- Fig. 3: ein Flussdiagramm zur Durchführung eines erfindungsgemäßen Verfahrens zum Anfahren eines selbstfahrenden Reinigungsroboters an eine Ladestation.

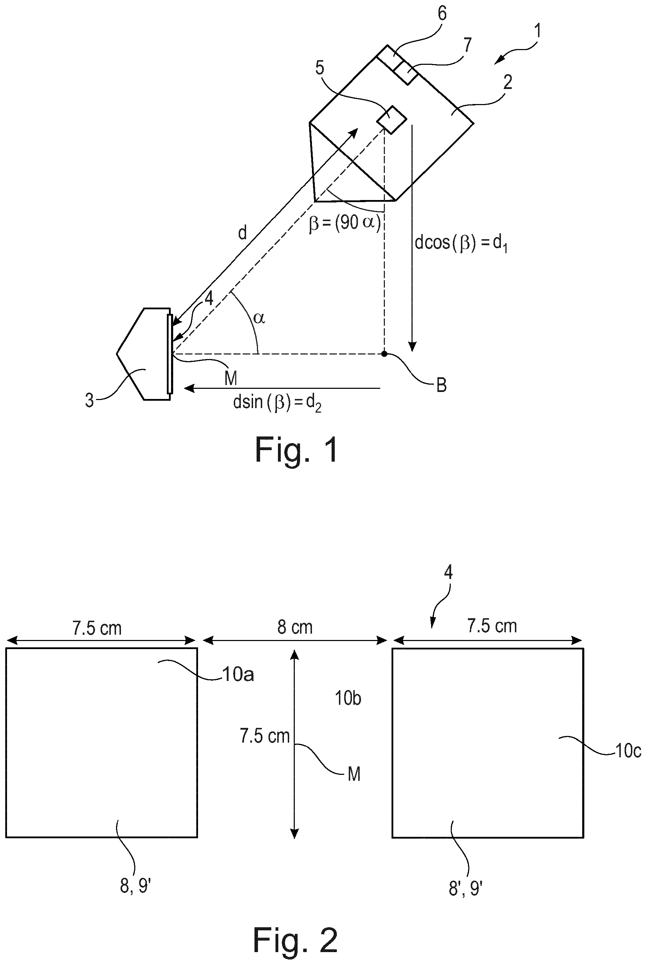

Entsprechend der Figur 1, weist ein erfindungsgemäßes Reinigungssystem 1 einen selbstfahrenden, das heißt autonomen, Reinigungsroboter 2 sowie eine Ladestation 3 auf. In der Ladestation 3 kann ein Akku des Reinigungsroboters 2 aufgeladen werden, sofern er dort andockt und elektrisch kontaktiert. Die Ladestation 3 besitzt eine sichtbar angeordnete Referenzmarkierung 4 (vergleiche auch Figur 2), während der Reinigungsroboter 2 zudem eine optische Erfassungseinrichtung 5, beispielsweise eine Kamera, besitzt. Über die Erfassungseinrichtung 5 kann der Reinigungsroboter 2 sowohl die Referenzmarkierung 4 als auch eine Umgebung des Reinigungsroboters 2 erfassen, um beispielsweise Hindernissen auszuweichen. Neben der Erfassungseinrichtung 5 besitzt der Reinigungsroboter 2 zudem eine Rechnereinrichtung 6, beispielsweise einen Computer oder einen Mikroprozessor, die kommunizierend mit der Erfassungseinrichtung 5 und einer Steuereinrichtung 7 zum Steuern eines Fahrprozesses des Reinigungsroboters 2 verbunden ist. Über die Steuereinrichtung 7 werden beispielsweise Steuerbefehle an eine Antriebseinrichtung übermittelt, über welche der Reinigungsroboter 2 angetrieben wird. Erfassungseinrichtung ist nun die Rechnereinrichtung 6 derart ausgebildet, dass sie einen Anfahrvorgang des Reinigungsroboters 2 zur Ladestation 3 distanzabhängig und erfassungsabhängig mittels eines HOG-Verfahrens (Histogramm von orientierten Gradienten) und eines Referenzmarkierungsverfahren durchführt. Erfindungsgemäß steuert somit die Rechnereinrichtung 6 den Anfahrvorgang des Reinigungsroboters 2 zur Ladestation 3 über das HOG-Verfahren, sofern ein Abstand d des Reinigungsroboters 2 zur Ladestation 3 größer ist als ein vordefinierter Abstand, beispielsweise größer als 3 Meter, oder die Erfassungseinrichtung 5 des Reinigungsroboters 2 die Referenzmarkierung 4 an der Ladestation 3 nicht erkennt bzw. nicht erfasst. Ist ein Abstand des Reinigungsroboters 2 zur Ladestation 3 kleiner oder gleich als der vordefinierte Abstand, beispielsweise kleiner oder gleich 3 Meter, und erfasst die Erfassungseinrichtung 5 des Reinigungsroboters 2 die Referenzmarkierung 4, so steuert die Rechnereinrichtung 6 den Anfahrvorgang des Reinigungsroboters 2 zur Ladestation 3 über die Referenzmarkierung 4. Das erfindungsgemäße Reinigungssystem 1 nutzt somit zur Steuerung des Anfahrvorgangs ein aus einem HOG-Verfahren und einem Referenzmarkierungsverfahren kombiniertes Verfahren.

Die Referenzmarkierung 4 kann beispielsweise zwei Bilder 8, 8' (vergleiche Figur 2) und/oder zwei Formen 9, 9' aufweisen, die beabstandet zueinander angeordnet sind. Bei der gemäß der Figur 2 gezeigten Referenzmarkierung 4 besitzt diese drei nebeneinander angeordnete Rechtecke 10a, 10b und 10c, wovon das mittlere Rechtecke 10b eine andere Farbe und eine andere Form aufweist, als die beiden seitlichen Rechtecke 10a und 10c. Im konkreten Fall der Figur 2 ist das mittlere Rechteck 10b 7,5 cm hoch und 8 cm breit, während die beiden seitlichen Rechtecke 10a und 10c jeweils Quadrate mit 7,5 cm Seitenlänge sind. Zudem ist im dargestellten Fall das mittlere Rechtecke 10b weiß, während die beiden seitlichen Rechtecke 10a und 10c rot sind. Die gemäß der Figur 2 dargestellte Referenzmarkierung 4 besitzt somit an den beiden seitlichen Rechtecken 10a und 10c jeweils vier Eckpunkte und vier Kanten, die eine eindeutige Zuordnung in einem Referenzmarkierungsverfahren ermöglichen.

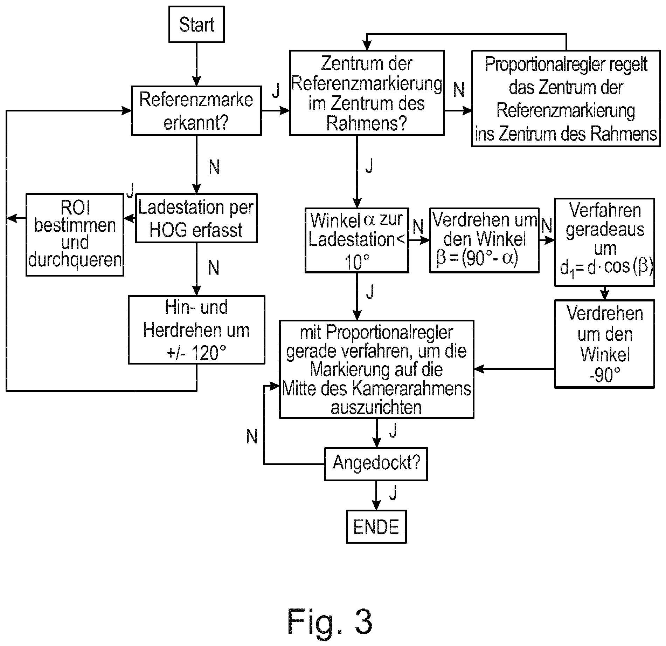

Ein derartiges erfindungsgemäßes Verfahren zum Anfahren des selbstfahrenden Reinigungsroboters 2 an die Ladestation 3 ist beispielsweise gemäß der Figur 3 dargestellt und nachfolgend beschrieben.

Das erfindungsgemäße Verfahren wird gestartet, woraufhin die Erfassungseinrichtung 5 die Referenzmarkierung 4 sucht. Erkennt sie diese nicht, beispielsweise weil ein Abstand d zur Referenzmarkierung 4, das heißt zwischen dem Reinigungsroboter 2 und der Ladestation 3 zu groß ist, so wird die Ladestation 3 mittels HOG-Verfahren erfasst. Erfolgt die Erfassung der Ladestation 3 mittels des HOG-Verfahrens, so wird ein Interessensbereich (ROI) bestimmt und durchquert, woraufhin wieder versucht wird, die Referenzmarkierung 4 mittels der optischen Erfassungseinrichtung 5 zu erfassen. Kann die Ladestation 3 mittels des HOG-Verfahrens nicht erfasst werden, so erfolgt ein Hin- und Herdrehen des Reinigungsroboters 2 um plus/minus 120 Grad und ein erneuter Versuch des Erfassens der Referenzmarkierung 4 mittels der Erfassungseinrichtung 5.

Die zuletzt genannten Verfahrensschritte können insbesondere dann auftreten, wenn sich der Reinigungsroboter 2 in einem großen Abstand zur Ladestation 3 befindet, beispielsweise größer als 3 Meter.

Wird die Referenzmarkierung 4 mittels der Erfassungseinrichtung 5 des Reinigungsroboters 2 erkannt, so steuert die Rechnereinrichtung 6 den Anfahrvorgang des Reinigungsroboters 2 zur Ladestation 3 über die Referenzmarkierung 4. Dies ist dann der Fall, sofern beispielsweise ein Abstand des Reinigungsroboters 2 zur Ladestation 3 kleiner oder gleich als der vordefinierte Abstand ist bzw. die Erfassungseinrichtung 5 die Referenzmarkierung 4 erfasst.

Nach dem Erfassen der Referenzmarkierung 4 berechnet die Rechnereinrichtung 6 den Abstand d, Koordinaten des Reinigungsroboters 2 sowie einen Winkel α des Reinigungsroboters 2 zu einem Mittelpunkt M der Referenzmarkierung 4. Beträgt nun der Winkel α ≤ 10 Grad, so steuert die Steuereinrichtung 7 den Reinigungsroboter 2 mittels eines Reglers, z.B. eines Proportionalreglers, direkt auf die Ladestation 3 zu, indem der (Proportional-)Regler den Reinigungsroboter 2 so verfährt, dass der Mittelpunkt M der Referenzmarkierung einen Mittelpunkt eines vorgegebenen Rahmens eines Kamerabildes darstellt. Liegt somit das Zentrum, bzw. der Mittelpunkt M der Referenzmarkierung 4 nicht im Zentrum des Rahmens des von der Erfassungseinrichtung 5 erfassten Bildes bzw. Bildrahmens, so regelt der (Proportional-)Regler durch Korrigieren der Bewegungsrichtung des Reinigungsroboters 2 das Zentrum der Referenzmarkierung 4 in das Zentrum des Rahmens.

Liegt der durch die Rechnereinrichtung 6 berechnete und von der Erfassungseinrichtung 5 erfasste Winkel α oberhalb von 10 Grad, so erfolgt zunächst ein Verdrehen des Reinigungsroboters entgegen dem Uhrzeigersinn um einen Winkel β = (90 Grad - α) und ein anschließendes Verfahren desselben um einen Abstand d₁ = d x cos(β). Dies entspricht dem Punkt B in Figur 1. Anschließend wird der Reinigungsroboter 2 über die Rechnereinrichtung 5, die Steuereinrichtung 7 und eine Antriebseinrichtung entgegengesetzt, dass es im vorliegenden Fall im Uhrzeigersinn, um einen Winkel von 90 Grad verdreht und anschließend um einen Abstand d₂ = d x sin(β) verfahren. Danach müsste der Reinigungsroboter 2 an die Ladestation 3 angedockt werden können. Sollte dies nicht der Fall sein, würde ein erneutes Ausrichten bzw. Verfahren des Reinigungsroboters 2 erfolgen müssen.

Beträgt beispielsweise der Winkel α > 10 Grad und gleichzeitig ein Abstand d weniger als 100 cm zur Ladestation 3, so fährt der Reinigungsroboter 2 zunächst zurück, um die zuvor genannten Verfahrensschritte und damit einen Anfahrprozess zuverlässig durchführen zu können.

Mit dem erfindungsgemäßen Verfahren und dem erfindungsgemäßen Reinigungssystem 1 ist es erstmals möglich, ein exaktes und zuverlässiges Anfahren des Reinigungsroboters 2 an die Ladestation 3 durch Kombination eines HOG-Verfahrens und eines Referenzmarkierungsverfahrens zu erreichen, wodurch erreicht werden kann, dass die Ladestation 3 insgesamt kompakter und kostengünstiger gebaut werden kann. Zudem kann auch bei größeren Abständen bzw. einem nicht direkten Erfassen der Referenzmarkierung 4 durch die Erfassungseinrichtung 5 ein zuverlässiges Anfahren gewährleistet werden. Dabei ist selbstverständlich klar, dass das HOG-Verfahren durch Vorgabe bzw. Einspielen unterschiedlicher Bilder der Ladestation 3 mit unterschiedlichen Hintergründen und Beleuchtungssituation bzw. Positionen einen Selbstlerneffekt steigert und dadurch ein verbessertes Auffinden der Ladestation 3 durch den Reinigungsroboter 2 ermöglicht.

### Bezugszeichenliste

- 1: Reinigungssystem
- 2: Reinigungsroboter
- 3: Ladestation
- 4: Referenzmarkierung
- 5: optische Erfassungseinrichtung
- 6: Rechnereinrichtung
- 7: Steuereinrichtung
- 8: Bild
- 9: Form
- 10: Rechteck

## Patentansprüche

1. Reinigungssystem (1) mit einem selbstfahrenden Reinigungsroboter (2) und einer Ladestation (3) zum Aufladen eines Akkus des Reinigungsroboters (2), wobei die Ladestation (3) eine sichtbar angeordnete Referenzmarkierung (4) und der Reinigungsroboter (2) eine optische Erfassungseinrichtung (5) aufweist, über welche er die Referenzmarkierung (4) und eine Umgebung erfasst, wobei der Reinigungsroboter (2) eine Rechnereinrichtung (6) aufweist, die kommunizierend mit der Erfassungseinrichtung (5) und einer Steuereinrichtung (7) zum Steuern eines Fahrprozesses des Reinigungsroboters (2) verbunden ist, wobei die Rechnereinrichtung (6) derart ausgebildet ist,
- dass sie einen Anfahrvorgang des Reinigungsroboters (2) zur Ladestation (3) über ein Histogramm von orientierten Gradienten (HOG) steuert, sofern ein Abstand d des Reinigungsroboters (2) zur Ladestation (3) größer ist als ein vordefinierter Abstand oder die Erfassungseinrichtung (5) die Referenzmarkierung (4) nicht erfasst, indem über das HOG-Verfahren ein Merkmalsklassifikator geschaffen wird, der zur Erkennung von Objekten in der Bildverarbeitung ausgebildet ist und dadurch eine sogenannte Region of Interest (ROI) erzeugt, die die Referenzmarkierung enthält,
- dass sie einen Anfahrvorgang des Reinigungsroboters (2) zur Ladestation (3) über die Referenzmarkierung (4) steuert, sofern die Erfassungseinrichtung (5) die Referenzmarkierung (4) erkennt und ein Abstand d des Reinigungsroboters (2) zur Ladestation (3) kleiner oder gleich ist als der vordefinierter Abstand, und die Erfassungseinrichtung (5) die Referenzmarkierung (4) erfasst,
**dadurch gekennzeichnet, dass** die Rechnereinrichtung (6) den Abstand d, Koordinaten sowie einen Winkel α des Reinigungsroboters (2) zu einem Mittelpunkt (M) der Referenzmarkierung (4) berechnet, sofern die Erfassungseinrichtung (5) die Referenzmarkierung (4) erfasst.

2. Reinigungssystem nach Anspruch 1, **dadurch gekennzeichnet, dass** die Referenzmarkierung (4) zumindest zwei Bilder (8,8`) und/oder Formen (9,9`) aufweist.

3. Reinigungssystem nach Anspruch 2, **dadurch gekennzeichnet, dass** die Referenzmarkierung (4) drei nebeneinander angeordnete Rechtecke (10a, 10b, 10c) aufweist, wovon ein mittleres Rechteck (10b) eine andere Farbe und/oder Form aufweist, als die beiden seitlichen Rechtecke (10a, 10c).

4. Reinigungssystem nach Anspruch 3, **dadurch gekennzeichnet, dass** das mittlere Rechteck (10b) 7,5 cm hoch und 8 cm breit ist, während die beiden seitlichen Rechtecke (10a, 10c) Quadrate mit 7,5 cm Seitenlänge sind, und/oder dass das mittlere Rechteck (10b) weiß ist, während die beiden seitlichen Rechtecke (10a, 10c) rot sind.

5. Reinigungssystem nach einem der vorhergehenden Ansprüche, **dadurch gekennzeichnet, dass** der vordefinierte Abstand 3 m beträgt.

6. Verfahren zum Anfahren eines selbstfahrenden Reinigungsroboters (2) an eine Ladestation (3) eines Reinigungssystems (1) nach einem der vorhergehenden Ansprüche, bei dem die Rechnereinrichtung (6)
- einen Anfahrvorgang des Reinigungsroboters (2) zur Ladestation (3) über ein Histogramm von orientierten Gradienten (HOG) steuert, sofern ein Abstand d des Reinigungsroboters (2) zur Ladestation (3) größer ist als ein vordefinierter Abstand oder die Erfassungseinrichtung (5) des Reinigungsroboters (2) die Referenzmarkierung (4) nicht erfasst, indem über das HOG-Verfahren ein Merkmalsklassifikator geschaffen wird, der zur Erkennung von Objekten in der Bildverarbeitung ausgebildet ist und dadurch eine sogenannte Region of Interest (ROI) erzeugt, die die Referenzmarkierung enthält,
- einen Anfahrvorgang des Reinigungsroboters (2) zur Ladestation (3) über die Referenzmarkierung (4) steuert, sofern die Erfassungseinrichtung (5) die Referenzmarkierung (4) erkennt und ein Abstand d des Reinigungsroboters (2) zur Ladestation (3) kleiner oder gleich ist als der vordefinierter Abstand, und die Erfassungseinrichtung (5) des Reinigungsroboters (2) die Referenzmarkierung (4) erfasst, **dadurch gekennzeichnet, dass** die Rechnereinrichtung (6) den Abstand d, Koordinaten sowie einen Winkel α des Reinigungsroboters (2) zu einem Mittelpunkt (M) der Referenzmarkierung (4) berechnet, sofern die Erfassungseinrichtung (5) die Referenzmarkierung (4) erfasst.

7. Verfahren nach Anspruch 6, **dadurch gekennzeichnet, dass** die Rechnereinrichtung (6) bei einem Winkel α ≤ 10° den Reinigungsroboter (2) mittels eines Proportionalreglers direkt zur Ladestation (3) zu steuert, indem der Proportionalregler den Reinigungsroboter (2) so verfährt, dass der Mittelpunkt (M) der Referenzmarkierung (4) einen Mittelpunkt eines vorgegebenen Rahmens der Erfassungseinrichtung (5) bildet.

8. Verfahren nach Anspruch 6 oder 7, **dadurch gekennzeichnet, dass** die Rechnereinrichtung (6) bei einem Winkel α > 10° den Reinigungsroboter (2)
- entgegen dem Uhrzeigersinn um einen Winkel β = (90° - α) verdreht und anschließend um einen Abstand d₁ = d · cos(β) verfährt,
- im Uhrzeigersinn um einen Winkel von 90° verdreht und anschließend um einen Abstand d₂ = d · sin(β) verfährt.

9. Verfahren nach einem der Ansprüche 6 bis 8, **dadurch gekennzeichnet, dass** die Rechnereinrichtung (6) bei einem Winkel α > 10° und einem Abstand d < 100 cm zur Ladestation (3) den Reinigungsroboter (2) zurückfährt.

## Claims

1. Cleaning system (1) having a self-driving cleaning robot (2) and a charging station (3) for charging a rechargeable battery of the cleaning robot (2), wherein the charging station (3) has a visibly arranged reference marker (4) and the cleaning robot (2) has an optical detecting facility (5), by way of which it detects the reference marker (4) and an environment, wherein the cleaning robot (2) has a computing facility (6), which is connected in a communicating manner to the detecting facility (5) and a control facility (7) so as to control a moving process of the cleaning robot (2), wherein the computing facility (6) is designed in such a manner
- that said computing facility controls a moving process of the cleaning robot (2) towards the charging station (3) by way of a histogram of oriented gradients (HOG) if a distance d between the cleaning robot (2) and the charging station (3) is greater than a pre-defined distance or the detecting facility (5) does not detect the reference marker (4), in that, by way of the HOG method, a feature classifier is created which is designed so as to recognise objects in the image processing and as a result generates a so-called region of interest (ROI) that comprises the reference marker,
- that said computing facility controls a moving process of the cleaning robot (2) towards the charging station (3) by way of the reference marker (4) if the detecting facility (5) recognises the reference marker (4) and if a distance d between the cleaning robot (2) and the charging station (3) is less than or equal to the pre-defined distance, and the detecting facility (5) detects the reference marker (4),
**characterised in that** the computing facility (6) calculates a distance d, coordinates and an angle α of the cleaning robot (2) with respect to a middle point (M) of the reference marker (4) if the detecting facility (5) detects the reference marker (4).

2. Cleaning system according to claim 1, **characterised in that** the reference marker (4) has at least two images (8, 8') and/or shapes (9,9').

3. Cleaning system according to claim 2, **characterised in that** the reference marker (4) has three rectangles (10a, 10b, 10c) which are arranged adjacent to one another and of which a middle rectangle (10b) has a different colour and/or shape than the two lateral rectangles (10a, 10c).

4. Cleaning system according to claim 3, **characterised in that** the middle rectangle (10b) is 7.5 cm high and 8 cm wide, whereas the two lateral rectangles (10a, 10c) are squares with sides 7.5 cm long and/or that the middle rectangle (10b) is white, whereas the two lateral rectangles (10a, 10c) are red.

5. Cleaning system according to one of the preceding claims, **characterised in that** the pre-defined distance is 3 m.

6. Method for moving a self-driving cleaning robot (2) to a charging station (3) of a cleaning system (1) according to one of the preceding claims, in which the computing facility (6)
- controls a moving process of the cleaning robot (2) towards the charging station (3) by way of a histogram of oriented gradients (HOG) if a distance d between the cleaning robot (2) and the charging station (3) is greater than a pre-defined distance or the detecting facility (5) of the cleaning robot (2) does not detect the reference marker (4), in that, by way of the HOG method, a feature classifier is created which is designed so as to recognise objects in the image processing and as a result generates a so-called region of interest (ROI) that comprises the reference marker,
- controls a moving process of the cleaning robot (2) towards the charging station (3) by way of the reference marker (4) if the detecting facility (5) recognises the reference marker (4) and if a distance d between the cleaning robot (2) and the charging station (3) is less than or equal to the pre-defined distance and the detecting facility (5) of the cleaning robot (2) detects the reference marker (4), **characterised in that** the computing facility (6) calculates a distance d, coordinates and an angle α of the cleaning robot (2) with respect to a middle point (M) of the reference marker (4) if the detecting facility (5) detects the reference marker (4).

7. Method according to claim 6, **characterised in that** in the case of an angle α ≤ 10° the computing facility (6) steers the cleaning robot (2) directly towards the charging station (3) by means of a proportional regulator, **in that** the proportional regulator moves the cleaning robot (2) in such a manner that the middle point (M) of the reference marker (4) illustrates a middle point of a specified frame of the detecting facility (5).

8. Method according to claim 6 or 7, **characterised in that** in the case of an angle α > 10° the computing facility (6)
- rotates the cleaning robot (2) in an anti-clockwise direction by an angle β = (90° - α) and subsequently moves said cleaning robot over a distance d₁ = d · cos(β).
- rotates the cleaning robot in a clockwise direction by an angle of 90° and subsequently moves said cleaning robot over a distance d₂ = d · sin(β).

9. Method according to one of claims 6 to 8, **characterised in that** in the case of an angle α > 10° and a distance d < 100 cm the computing facility (6) moves the cleaning robot (2) back towards the charging station (3).

## Revendications

1. Système de nettoyage (1) comprenant un robot de nettoyage automoteur (2) et une station de charge (3) pour charger une batterie du robot de nettoyage (2), dans lequel la station de charge (3) comprend un marquage de référence (4) disposé de façon visible et le robot de nettoyage (2) comprend un dispositif de détection optique (5) par l'intermédiaire duquel il détecte le marquage de référence (4) et un environnement, dans lequel le robot de nettoyage (2) comprend un moyen de calcul (6) qui est relié en communication avec le dispositif de détection (5) et avec un dispositif de commande (7) pour commander un processus de déplacement du robot de nettoyage (2), dans lequel le moyen de calcul (6) est configuré
- de telle sorte qu'il pilote un processus d'approche du robot de nettoyage (2) vers la station de charge (3) à l'aide d'un histogramme de gradients orientés (HOG), si une distance d du robot de nettoyage (2) à la station de charge (3) est supérieure à une distance prédéfinie ou si le dispositif de détection (5) ne détecte pas le marquage de référence (4), en créant un classificateur d'attributs par le procédé HOG, qui est configuré pour reconnaître des objets dans le traitement d'image et génère ainsi ce que l'on nomme une région d'intérêt (ROI), qui contient le marquage de référence, et
- de telle sorte qu'il pilote un processus d'approche du robot de nettoyage (2) vers la station de charge (3) par le biais du marquage de référence (4) si le dispositif de détection (5) reconnaît le marquage de référence (4) et si une distance d du robot de nettoyage (2) à la station de charge (3) est inférieure ou égale à la distance prédéfinie, et le dispositif de détection (5) détecte le marquage de référence (4),
**caractérisé en ce que** le moyen de calcul (6) calcule la distance d, des coordonnées ainsi qu'un angle α du robot de nettoyage (2) par rapport à un centre (M) du marquage de référence (4), si le dispositif de détection (5) détecte le marquage de référence (4).

2. Système de nettoyage selon la revendication 1, **caractérisé en ce que** le marquage de référence (4) comprend au moins deux images (8, 8') et/ou formes (9, 9').

3. Système de nettoyage selon la revendication 2, **caractérisé en ce que** le marquage de référence (4) comprend trois rectangles (10a, 10b, 10c) disposés l'un à côté de l'autre, parmi lesquels un rectangle central (10b) comprend une couleur et/ou une forme différente des deux rectangles latéraux (10a, 10c).

4. Système de nettoyage selon la revendication 3, **caractérisé en ce que** le rectangle central (10b) a une hauteur de 7,5 cm et une largeur de 8 cm, tandis que les deux rectangles latéraux (10a, 10c) sont des carrés de 7,5 cm de longueur de côté et/ou **en ce que** le rectangle central (10b) est blanc, tandis que les deux rectangles latéraux (10a, 10c) sont rouges.

5. Système de nettoyage selon l'une des revendications précédentes, **caractérisé en ce que** la distance prédéfinie est de 3 m.

6. Procédé pour approcher un robot de nettoyage automoteur (2) jusqu'au niveau d'une station de charge (3) d'un système de nettoyage (1) selon l'une des revendications précédentes, dans lequel le moyen de calcul (6) :
- pilote un processus d'approche du robot de nettoyage (2) vers la station de charge (3) à l'aide d'un histogramme de gradients orientés (HOG), si une distance d du robot de nettoyage (2) à la station de charge (3) est supérieure à une distance prédéfinie ou si le dispositif de détection (5) du robot de nettoyage (2) ne détecte pas le marquage de référence (7), en créant un classificateur d'attributs par le procédé HOG, qui est configuré pour reconnaître des objets dans le traitement d'image et génère ainsi ce que l'on nomme une région d'intérêt (ROI), qui contient le marquage de référence, et
- pilote un processus d'approche du robot de nettoyage (2) vers la station de charge (3) par le biais du marquage de référence (4) si le dispositif de détection (5) reconnaît le marquage de référence (4) et si une distance d du robot de nettoyage (2) à la station de charge (3) est inférieure ou égale à la distance prédéfinie, et le dispositif de détection (5) du robot de nettoyage (2) détecte le marquage de référence (4),
**caractérisé en ce que** le moyen de calcul (6) calcule la distance d, des coordonnées ainsi qu'un angle α du robot de nettoyage (2) par rapport à un centre (M) du marquage de référence (4) si le dispositif de détection (5) détecte le marquage de référence (4).

7. Procédé selon la revendication 6, **caractérisé en ce que** le moyen de calcul (6), lorsqu'un angle α est ≤ 10°, dirige directement le robot de nettoyage (2) vers la station de charge (3) au moyen d'un régulateur proportionnel, de sorte que le régulateur proportionnel fait avancer le robot de nettoyage (2) de manière à ce que le centre (M) du marquage de référence (4) forme un centre d'un cadre prédéterminé du dispositif de détection (5).

8. Procédé selon la revendication 6 ou 7, **caractérisé en ce que** le moyen de calcul (6), lorsque l'angle α est > 10°,
- fait tourner le robot de nettoyage (2) dans le sens contraire des aiguilles d'une montre d'un angle β = (90° - α) et le fait avancer ensuite d'une distance d₁ = d · cos(β), et
- fait tourner le robot de nettoyage (2) dans le sens des aiguilles d'une montre d'un angle de 90° et le fait avancer ensuite d'une distance d₂ = d · sin(β).

9. Procédé selon l'une des revendications 6 à 8, **caractérisé en ce que** le moyen de calcul (6), lorsqu'un angle α est > 10° et lorsqu'une distance d est < 100 cm, fait retourner le robot de nettoyage (2) vers la station de charge (3).
